(19) Europäisches Patentamt
European Patent Office
Office européen des brevets

(11) **EP 4 722 988 A1**

(12) **EUROPEAN PATENT APPLICATION**
published in accordance with Art. 153(4) EPC

(43) Date of publication:
**08.04.2026 Bulletin 2026/15**

(21) Application number: **24811432.4**

(22) Date of filing: **24.05.2024**

(51) International Patent Classification (IPC):
*G06N 3/09* (2023.01)     *G06N 3/10* (2006.01)
*G06N 3/0455* (2023.01)     *G06T 17/20* (2006.01)

(52) Cooperative Patent Classification (CPC):
**G06N 3/0455; G06N 3/09; G06N 3/10; G06T 17/20**

(86) International application number:
**PCT/KR2024/007046**

(87) International publication number:
**WO 2024/242494 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.05.2023   KR 20230067275
23.05.2024   KR 20240067046**

(71) Applicant: **CLO Virtual Fashion Inc.
Seoul 06236 (KR)**

(72) Inventors:
• **JU, Eun Jung
Seoul 06236 (KR)**
• **SHIM, Eung June
Seoul 06236 (KR)**
• **CHOI, Myung Geol
Seoul 06236 (KR)**

(74) Representative: **V.O.
P.O. Box 87930
2508 DH Den Haag (NL)**

(54) **METHOD AND APPARATUS FOR OPTIMIZING CLOTHING SIMULATION PARAMETER**

(57)     Disclosed are a method and an apparatus for estimating a physical property parameter. According to an embodiment, the method for estimating a physical property parameter for a drape simulation of a virtual fabric comprises the steps of: generating a mesh by applying a physical property parameter corresponding to a virtual fabric to a neural network; acquiring drape data corresponding to the type of target data related to drape of the virtual fabric, on the basis of the mesh; and updating the physical property parameter on the basis of an error between the acquired drape data and the target data.

```
                    ┌─────────┐
                    │  Start  │
                    └─────────┘
                         │
                         ▼
┌──────────────────────────────────────────────┐  ⌐110
│ Generate mesh by applying physical property   │
│   parameters corresponding to virtual fabric  │
└──────────────────────────────────────────────┘
                         │
                         ▼
┌──────────────────────────────────────────────┐  ⌐120
│  Obtain simulated drape data corresponding    │
│  to type of target data related to drape of   │
│       virtual fabric based on mesh            │
└──────────────────────────────────────────────┘
                         │
                         ▼
┌──────────────────────────────────────────────┐  ⌐130
│  Update physical property parameters based    │
│  on error between target data and obtained    │
│         simulated drape data                  │
└──────────────────────────────────────────────┘
                         │
                         ▼
                    ┌─────────┐
                    │   End   │
                    └─────────┘
```

**FIG. 1**

EP 4 722 988 A1

**Description**

## TECHNICAL FIELD

The following embodiments relate to a method and apparatus for optimizing garment simulation parameters, and more specifically, to estimating physical property parameters for a three-dimensional (3D) simulation.

## BACKGROUND ART

In the fashion design industry, virtual simulation is widely used to develop new clothing designs. It is essential for fashion designers using virtual simulation to determine physical property parameters that represent the specific physical characteristics of actual fabrics. The current methods of obtaining physical property parameters include a method using a mechanical device to measure the properties of fabric samples, an optimization method to minimize the difference between a simulation result and a target result, a method using a learning model, and the like. Development of methods to improve the accuracy of estimating physical property parameters is needed.

## DISCLOSURE OF THE INVENTION

### TECHNICAL GOALS

Through the embodiments below, a method of estimating physical property parameters for three-dimensional (3D) simulation that satisfies both the speed of a learning-based neural network and the flexibility of an optimization method may be provided.

However, the technical aspects are not limited to the aforementioned aspects, and other technical aspects may be present.

### TECHNICAL SOLUTIONS

A method of estimating physical property parameters for drape simulation of a virtual fabric according to an embodiment includes generating, by applying physical property parameters corresponding to the virtual fabric to a neural network, which is trained on a correlation between the physical property parameters and a mesh in a state in which the virtual fabric is draped on an object, the mesh, obtaining, based on the mesh, simulated drape data corresponding to a type of target data related to a drape of the virtual fabric, and updating the physical property parameters based on an error between the obtained simulated drape data and the target data.

The obtaining of the physical property parameters may include updating the physical property parameters based on an optimizer for determining a value of the physical property parameters that minimizes the error.

The generating of the mesh may include obtaining a latent vector corresponding to the physical property parameters from a regressor of the neural network and generating the mesh corresponding to the latent vector, based on a decoder of the neural network.

The error may include at least one of an error corresponding to a difference in a three-dimensional (3D) shape of a boundary curve between the target data and the simulated drape data, an error corresponding to a difference in a two-dimensional (2D) shape of the boundary curve between the target data and the simulated drape data, an error corresponding to a difference in a depth image matrix between the target data and the simulated drape data, and an error corresponding to a difference in reference points between the target data and the simulated drape data.

The method of estimating physical property parameters for drape simulation of a virtual fabric may further include obtaining the physical property parameters based on the target data input by a user.

The type of target data may include at least one of a type of 3D scan data related to the drape of the virtual fabric, a type of 2D image data related to the drape of the virtual fabric, a type of sketch data related to the drape of the virtual fabric, a type of depth image data related to the drape of the virtual fabric, and a type of numerical data related to the drape of the virtual fabric.

The target data may include at least one of CIR-shape drape data, SQR-shape drape data, and CAP-shape drape data.

The physical property parameters may include at least one of a parameter related to stretch stiffness and a parameter related to bending stiffness.

The parameter related to stretch stiffness may include a first parameter and a second parameter related to a factor of a stretch coefficient function, a weft direction parameter, a warp direction parameter, and a bias direction parameter of each of the first parameter and the second parameter.

The parameter related to bending stiffness may include a third parameter and a fourth parameter related to a factor of a bending coefficient function, a weft direction parameter, a warp direction parameter, and a bias direction parameter of each of the third parameter and the fourth parameter.

The method of estimating physical property parameters for drape simulation of a virtual fabric may further include generating a drape simulation result of the virtual fabric based on the updated physical property parameters.

An electronic device for estimating physical property parameters for drape simulation of a virtual fabric according to an embodiment includes a processor configured to generate, by applying physical property parameters corresponding to the virtual fabric to a neural network, which is trained on a correlation between the physical property parameters and a mesh in a state in which the virtual fabric is draped on an object, the mesh, obtain, based on the mesh, simulated drape data corresponding to a type of target data related to a drape of the virtual fabric, and update the physical property parameters based on an error between the obtained simulated drape data and the target data.

## BRIEF DESCRIPTION OF DRAWINGS

FIG. 1 is a flowchart illustrating an operation of a method of estimating physical property parameters for a drape simulation of a virtual fabric, according to an embodiment.

FIG. 2 is a diagram illustrating a structure of a system for estimating physical property parameters, according to an embodiment.

FIGS. 3A and 3B are diagrams illustrating physical property parameter values determined as a result of optimization of a set of physical property parameters corresponding to similar target drapes.

FIGS. 4A to 4C are diagrams for illustrating examples of different types of drape shapes.

FIG. 5 is a diagram for illustrating a specific structure and learning method of a simulation prediction model, according to an embodiment.

FIGS. 6A and 6B are diagrams illustrating a graph of a reconstruction error and a graph of a regression error, respectively, according to a number of pieces of training data.

FIGS. 7A to 7C are diagrams illustrating target data according to an embodiment.

FIG. 8 is a diagram illustrating a configuration of an apparatus.

## BEST MODE FOR CARRYING OUT THE INVENTION

The following structural or functional description of examples is provided as an example only and various alterations and modifications may be made to the examples. Thus, an actual form of implementation is not construed as limited to the examples described herein and should be understood to include all changes, equivalents, and replacements within the idea and the technical scope of the disclosure.

With regard to the description of the drawings, similar reference numerals may be used to refer to similar or related components. It is to be understood that a singular form of a noun corresponding to an item may include one or more of the item, unless the relevant context clearly indicates otherwise.

As used herein, each of "A or B," "at least one of A and B," "at least one of A or B," "A, B, or C," "at least one of A, B, and C," "at least one of A, B, or C," "one or a combination or two or more of A, B, and C," and the like may include any one of the items listed together in the corresponding one of the phrases, or all possible combinations thereof.

Terms such as "first," "second," "first," or "second" may be used simply to distinguish one component from another and may not limit the components with respect to other aspects (e.g., importance or order). For example, a first component may be referred to as a second component, and similarly, the second component may also be referred to as the first component.

It is to be understood that if an element (e.g., a first element) is referred to, with or without the term "operatively" or "communicatively," as "coupled with," "coupled to," "connected with," or "connected to" another element (e.g., a second element), the element may be coupled with the other element directly (e.g., by wire), wirelessly, or via a third element.

The singular forms "a," "an," and "the" are intended to include the plural forms as well, unless the context clearly indicates otherwise. It will be further understood that the terms "comprises/comprising" and/or "includes/including," when used herein, specify the presence of stated features, integers, steps, operations, elements, and/or components, but do not preclude the presence or addition of one or more other features, integers, steps, operations, elements, components and/or groups thereof.

Unless otherwise defined, all terms used herein including technical and scientific terms have the same meanings as those commonly understood by one of ordinary skill in the art to which this disclosure pertains. Terms such as those defined in commonly used dictionaries are to be interpreted as having a meaning that is consistent with their meaning in the context of the relevant art and are not to be interpreted in an idealized or overly formal sense unless expressly so defined herein.

Hereinafter, the examples are described in detail with reference to the accompanying drawings. When describing the examples with reference to the accompanying drawings, like reference numerals refer to like components and a repeated description related thereto is omitted.

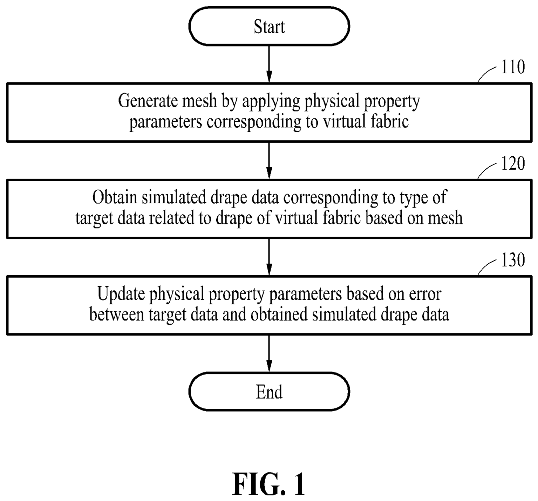

FIG. 1 is a flowchart illustrating an operation of a method of estimating physical property parameters for a drape simulation of a virtual fabric, according to an embodiment.

Referring to FIG. 1, a method of estimating physical property parameters may include operation 110 of generating a mesh by applying physical property parameters corresponding to a virtual fabric to a neural network. The virtual fabric may correspond to a virtual implementation of a fabric that exists in reality.

The physical property parameters may be parameters related to physical properties that may appear in a fabric (or cloth or textile) or may be measured in a fabric. For example, the physical property parameters may include parameters used in virtual simulation to reproduce the physical properties of an actual fabric. For example, the physical property parameters may include at least one of a parameter related to stretch stiffness and a parameter related to bending stiffness. The stretch stiffness may be a numerical expression of a strength of a fabric to resist a tensile load (or a force to stretch the fabric). The bending stiffness may be a numerical expression of a strength of a fabric to resist a bending load (or a force to bend the fabric). Specific examples of the physical property parameters are described in detail below.

A method of estimating physical property parameters may include obtaining physical property parameters based on target data, which is related to a drape of the virtual fabric, input by a user. An initial value of the physical property parameters may be determined based on the target data. For example, the initial value of the physical property parameters may be obtained by a measuring apparatus that measures the physical property parameters from the target data.

The target data may be data including information on the fabric of the virtual fabric or information on the drape of the virtual fabric. For example, the target data may include at least one of three-dimensional (3D) scan data related to the drape of the virtual fabric, two-dimensional (2D) image data related to the drape of the virtual fabric, sketch data related to the drape of the virtual fabric, depth image data related to the drape of the virtual fabric, and numerical data related to the drape of the virtual fabric. Specifically, the target data may be data obtained experimentally on various data corresponding to an arbitrary fabric. More specifically, the target data may be data confirming a result of draping the arbitrary fabric on an object.

For example, the 3D scan data related to the drape of the virtual fabric may include data obtained by 3D-scanning a shape of the actual fabric placed on the object. For example, the 2D image data related to the drape of the virtual fabric may include 2D image data obtained by projecting the shape of the actual fabric placed on the object onto a specific plane (e.g., a top view and a front view). For example, the sketch data related to the drape of the virtual fabric may include data sketching the shape of the actual fabric placed on the object. For example, the depth image data related to the drape of the virtual fabric may include data including depth information of the shape of the actual fabric placed on the object obtained from a depth sensor. For example, numerical data related to the drape of the virtual fabric may be numerical data to represent the shape of the actual fabric placed on the object and may include data related to a size of the fabric, a size of an area in which the fabric touches the object, a distance from a floor to a vertex of the fabric, and the like.

A processor may obtain one or more physical property parameter(s) matching the target data. The processor may obtain the physical property parameters from a database in a form of a lookup table, or by processing (for example, interpolating) information stored in the database. Alternatively, the processor may be set to infer the physical property parameters matching the target data using a pre-trained neural network.

For example, a drape simulation result of the virtual fabric to which the initial value of the physical property parameters is applied may not be sufficiently similar to a drape result of the actual fabric. Accordingly, an initial physical property parameter may be updated by operations 120 and 130 described below. An update of the physical property parameters may be performed repeatedly, that is, operations 110, 120, and 130 may be repeatedly performed using the updated physical property parameters. Finally, based on the updated physical property parameters, the processor may generate the drape simulation result of the virtual fabric.

The neural network may include a neural network that is trained on a correlation between the physical property parameters and the mesh in which the virtual fabric is draped (or placed) on the object. The object may refer to an object used for a drape simulation of fabric. The object may be, but not limited to, a 3D cylindrical cylinder. A cylinder herein may have various shapes other than a cylindrical shape. In another example, the object may be a 3D avatar. The neural network may be trained to generate a mesh corresponding to the shape of the virtual fabric draped on the object. A specific structure and training method of the neural network are described in detail below.

A method of estimating physical property parameters may include operation 120 of obtaining simulated drape data corresponding to a type of target data related to the drape of the virtual fabric based on the mesh. The target data may be data corresponding to a drape shape of the virtual fabric that is a target of the drape simulation result of the virtual fabric generated based on the physical property parameters. The simulated drape data may be drape data simulating using a spring mass model based on the mesh. That is, the simulated drape data for the virtual fabric may be drape data for the virtual fabric that corresponds to the drape data obtained when the actual fabric is draped on the object.

For example, the type of target data may include at least one of a type of 3D scan data related to the drape of the virtual fabric, a type of 2D image data related to the drape of the virtual fabric, a type of sketch data related to the drape of the virtual fabric, a type of depth image data related to the drape of the virtual fabric, and a type of numerical data related to the drape of the virtual fabric.

The simulated drape data corresponding to the type of target data may correspond to data of the type of target data extracted from a mesh generated by a neural network. For example, when the type of target data is the type of 3D scan data related to the drape of the virtual fabric, 3D data illustrating a shape of the virtual fabric may be extracted from the mesh. For example, when the type of target data is the type of 2D image data related to the drape of the virtual fabric or the type of sketch data related to the drape of the virtual fabric, 2D data may be obtained by projecting the shape of the virtual fabric obtained from the mesh onto a plane corresponding to the target data. For example, when the type of target data is the type of depth image data related to the drape of the virtual fabric, depth image data of the virtual fabric may be extracted from the mesh. For example, when the type of target data is the type of numerical data related to the drape of the virtual fabric, numerical data included in the target data may be extracted from the mesh.

For example, the target data may include at least one of CIR-shape drape data, SQR-shape drape data, and CAP-shape drape data. A CIR shape, an SQR shape, and a CAP shape may be types of drape shape and are described in detail below.

A method of estimating physical property parameters may include operation 130 of updating physical property parameters based on an error between the obtained simulated drape data and the target data. Operation 130 of updating physical property parameters may include determining a value of optimized physical property parameters. The value of the optimized physical property parameters may include a value of physical property parameters that match a shape of a fabric indicated by the target data.

Operation 130 of updating physical property parameters may include updating physical property parameters based on an optimizer for determining a value of physical property parameters that minimizes an error.

The error may include the meaning of an error function for optimization. The error may be determined based on a difference in shape between the target data and the simulated drape data. For example, the error may include at least one of an error corresponding to a difference in a 3D shape of a boundary curve between the target data and the simulated drape data, an error corresponding to a difference in a 2D shape of the boundary curve between the target data and the simulated drape data, an error corresponding to a difference in a depth image matrix between the target data and the simulated drape data, and an error corresponding to a difference in reference points between the target data and the simulated drape data. An optimization operation based on an error is described in detail below.

A method of estimating physical property parameters may include generating a drape simulation result of a virtual fabric based on updated physical property parameters. The processor may generate a drape simulation result of the virtual fabric corresponding to the physical property parameters determined by optimization. That is, the processor may generate the drape simulation result of the virtual fabric corresponding to the target data. The drape simulation result of the virtual fabric may include 3D data of the drape shape of the fabric indicated by the target data. The drape shape of the fabric may refer to a shape of the fabric draped on the object. For example, the drape simulation result of the virtual fabric may include 3D graphic data of the drape shape of the fabric. For example, the 3D graphic data may be output through an interface.

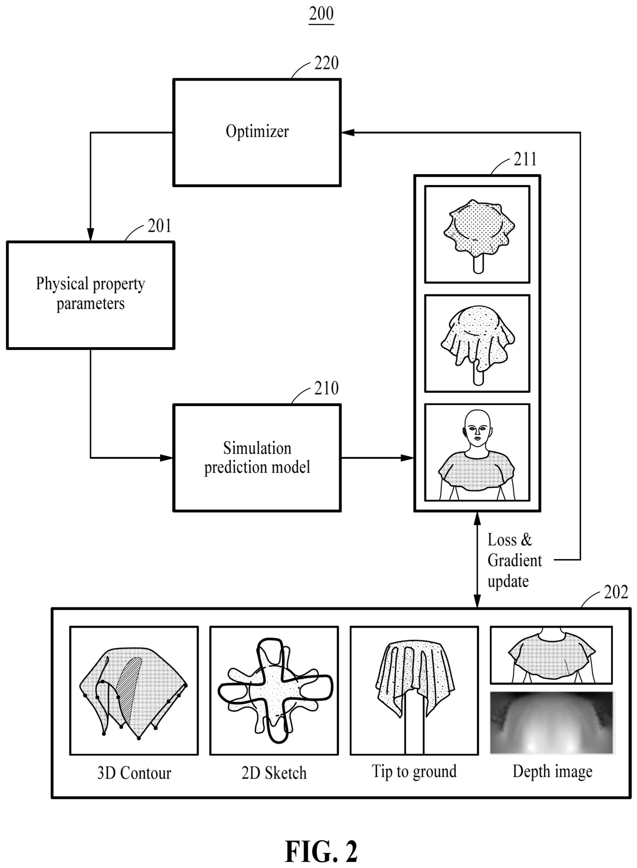

FIG. 2 is a diagram illustrating a structure of a system for estimating physical property parameters, according to an embodiment.

Referring to FIG. 2, a system 200 may be a system that performs the method of estimating physical property parameters 201 described above with reference to FIG. 1. The physical property parameters 201 input to the system 200 may include at least one physical property parameter. The system 200 may estimate a simulation result using a pre-trained neural network of a simulation prediction model 210 to optimize the physical property parameters 201, which may be simulation parameters, and reconstruct drape data 211 of a virtual fabric. The drape data 211 of the virtual fabric reconstructed from the estimated simulation result may indicate a shape of a simulated drape. The drape data 211 of the virtual fabric reconstructed from the estimated simulation result may be referred to as simulated drape data or a simulated drape. The reconstructed drape data 211 of the virtual fabric may be compared to the target data based on various physical property parameters 201, and an objective function may be freely designed according to needs of a user.

Target data 202 input to the system 200 may include various types of data, including at least one of 3D scan information (e.g., a 3D contour) of a drape shape of an actual fabric, a 2D silhouette image (e.g., a 2D sketch), vertex height (e.g., tip to ground) data of a draped fabric, and a depth image. For example, the 3D scan information of the drape shape of the actual fabric may correspond to the 3D scan data related to the drape of the virtual fabric described above. For example, the 2D silhouette image may correspond to the 2D image data related to the drape of the virtual fabric described above. For example, the vertex height data of the draped fabric may correspond to the numerical data related to the drape of the virtual fabric described above.

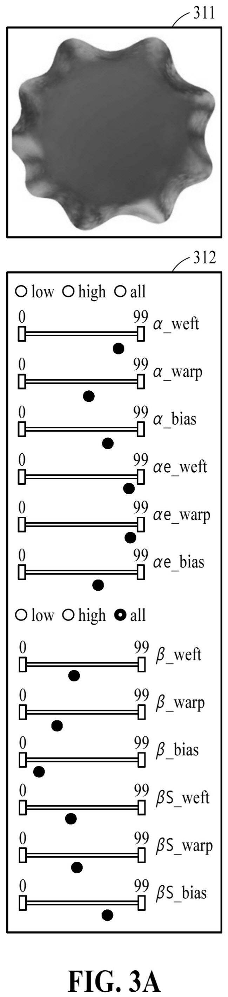

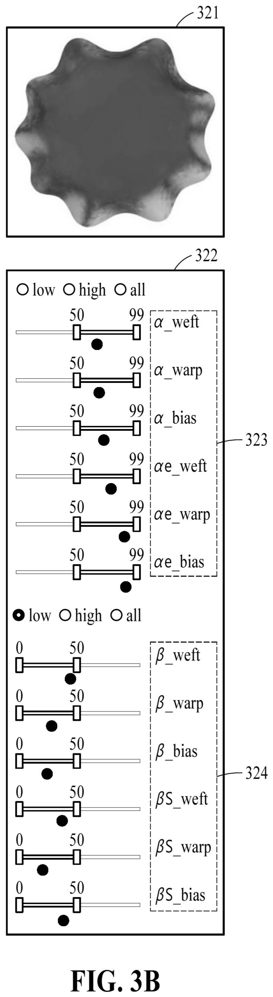

The physical property parameters 201 may be converged to an optimization result within seconds to minutes through the system 200. In addition, by specifying different ranges of the physical property parameters 201 through the system 200, the system 200 may obtain a plurality of sets of the physical property parameters 201 that may generate a same or similar drape simulation result of the virtual fabric. For example, FIGS. 3A and 3B illustrate a value of physical property parameters determined as a result of optimization of a set of physical property parameters corresponding to similar target drapes. Referring to a screen 312 of FIG. 3A displaying a range and value of a set of physical property parameters, the range and value of each physical property parameter included in the set of physical property parameters may be specified to be from 0 to 99. The processor may determine a value of physical property parameters within the range specified through optimization. The processor may be set to output a drape simulation result of the virtual fabric corresponding to the determined physical property parameters on a screen 311. Referring to a screen 322 of FIG. 3B displaying a range and value of a set of physical property parameters, the processor may set the range of a portion of physical property parameters 323 to be from 50 to 99 and the range of the other portion of physical property parameters 324 to be from 0 to 50. Accordingly, the value of physical property parameters may be determined by optimization within the specified range. The processor may be set to output a drape simulation result of the virtual fabric corresponding to the determined physical property parameters on a screen 321. The processor may obtain a plurality of sets of physical property parameters that may generate a same or similar drape simulation result of the virtual fabric.

Referring again to FIG. 2, to estimate the physical property parameters 201, the processor may be set to use a mesh of a simulation result estimated by the simulation prediction model 210 based on a neural network. The processor may obtain a gradient of a change in the physical property parameters 201 according to a change in the simulation result through estimating the simulation result using a neural network. The gradient of the change in the physical property parameters 201 may be used to improve a speed and accuracy of local optimization of the physical property parameters 201. The estimation of the simulation result using a neural network may have a faster operation speed than performing an actual simulation. In addition, the method of estimating physical property parameters may be applied regardless of a type of simulator. In other words, the system 200 may be applied to any type of simulator.

For example, the simulation prediction model 210 may be a model based on a spring mass model. Backward differentiation formula (BDF)-2 implicit integration may be applied to the simulation prediction model 210. The simulation prediction model 210 may estimate a drape simulation result by considering stretch stiffness and bending stiffness, which may greatly affect a drape shape of the fabric. A stress-strain relationship may be defined as a non-linear function.

For example, a stretch coefficient function may be an exponential function of a stretched length and may be defined as Equation 1 below.

[Equation 1]

$$s(l) = \alpha \exp\left(\alpha_e \frac{|l - l_0|}{l_0}\right)$$

.

In Equation 1, $\alpha$ denotes a tensile base factor, and $\alpha_e$ denotes a tensile growth factor, which may be a factor related to the gradient of the function.

For example, a bending coefficient function $b(\theta)$ may be defined as Equation 2 below.

[Equation 2]

$$b_i(\theta) = \begin{cases} \beta & \cos(\theta) > t \\ \beta_S \beta & \cos(\theta) \leq t \end{cases}$$

.

In Equation 2, $\beta$ denotes a bending strength factor, and $\beta_s$ denotes a bending scale factor. $\theta$ denotes an angle at which two adjacent mesh triangles are bent, and in a fully unfolded state, $\theta=0°$. When bent above a certain level (e.g., $\cos(\theta)<=t$), the bending strength factor $\beta$ may be reduced by $\beta_s$ that may be defined as a value from 0 to 1. Density of the fabric may also have an effect on the drape shape of the fabric. The simulation prediction model 210 may estimate the simulation result using a value obtained by dividing a stretch stiffness value by a density value. In this case, the density may be fixed as a constant. For example, the physical property parameters 201 to be estimated may be $\alpha$, $\alpha_e$, $\beta$, and $\beta_s$. The stretch stiffness and the bending stiffness may be defined as an anisotropic model that is independently defined for each of weft, warp, and bias directions. A total number of the physical property parameters 201 may be 12. The weft may be a thread of a horizontal direction of the fabric and may also be referred to as a "weft thread." In addition, the "warp" may be a thread of a vertical direction of the fabric and may also be referred to as a "warp thread." In other words, a parameter related to the stretch stiffness among the physical property parameters 201 may include a first parameter (e.g., $\alpha$) and a second parameter (e.g., $\alpha_c$) related to a factor of the stretch coefficient function and may include a weft direction parameter, a warp direction parameter, and a bias direction parameter of each of the first parameter and the second parameter. The parameter related to the stretch stiffness may include six parameters. A parameter related to the bending stiffness among the physical property parameters 201 may include a third parameter (e.g., $\beta$) and a fourth parameter (e.g., $\beta_s$) related to a factor of the bending coefficient function and may include a weft direction parameter, a warp direction parameter, and a bias direction parameter of each of the third and fourth parameters. The parameter related to the bending stiffness may include six parameters.

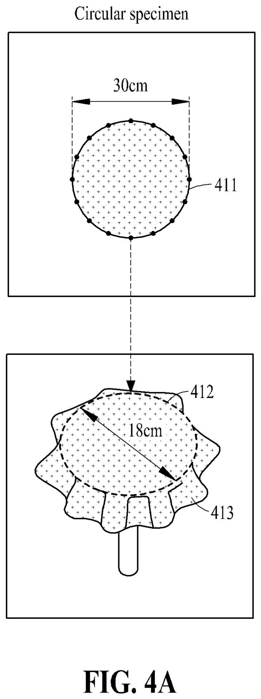

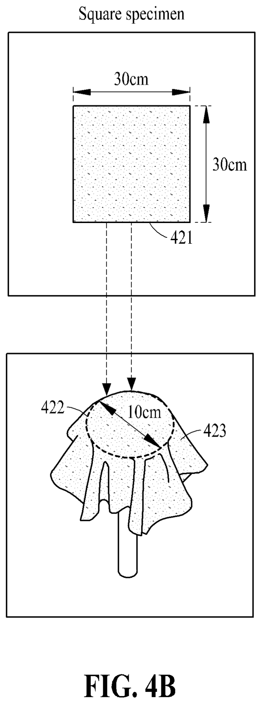

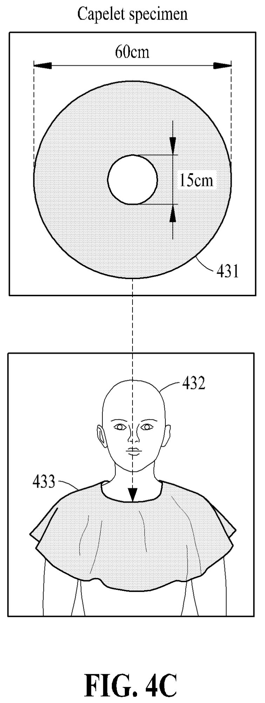

The drape shape of the target data 202 may include a CIR shape, an SQR shape, and a CAP shape. For example, referring to FIG. 4A, a CIR shape 413 may be a drape shape of a portion unsupported by an object when a circular specimen (e.g., a circular specimen having a 30-centimeter (cm) diameter) 411 is placed on a disk 412 of a cylinder, or the object. In the case of the CIR shape 413, since a width of all unsupported areas of the specimen is the same, the drape shape may not be biased by mass distribution. For example, referring to FIG. 4B, an SQR shape 423 may be a drape shape of a portion unsupported by an object when a square specimen (e.g., a square specimen with a 30 cm edge) 421 is placed on a disk 422 of a cylinder, or the object. The square specimen 421 may be advantageous for distinguishing between weft and warp directions compared to specimens of other shapes. Referring to FIG. 4C, a CAP shape 433 may be a drape shape when a capelet specimen 431, or a donut-shaped specimen (e.g., a circular specimen that is 60 cm in diameter, with a 15 cm diameter circular hole in the center) is placed on a human body 432, or the object.

Referring again to FIG. 2, a sufficient amount of data on the actual fabric may be used to generate training data for the simulation prediction model 210. For example, optimized physical property parameters for 5,000 different actual fabrics may be obtained as the training data from a random garment simulator (e.g., CLO3D). Physical parameter data may be classified into "k" clusters using a Gaussian mixture model (GMM), and sampling of a same size may be performed on each cluster. For example, by setting k = 5 and sampling 60,000 pieces of data for each cluster, physical property parameter data for a total of 300,000 fabrics may be obtained. A result of performing simulation for specimens of three types (e.g., CIR, SQR, and CAP) of drape shapes on each physical property parameter sample may be saved as a mesh. The specimen used in the simulation may be made of a triangular mesh randomly sampled so that a maximum vertex spacing may be a preset value. For example, the specimen may be made of a triangular mesh randomly sampled with a vertex spacing of less than 5 mm for the CIR and the SQR shapes and less than 10 mm for the CAP shape. A number of vertices (or triangles) of the specimens may be 5,148 (or 10,102) for the CIR shape, 6,563 (or 12,880) for the SQR shape, and 4,890 (or 37,930) for the CAP shape. A simulation time step may be set to 0.03 seconds.

The simulation prediction model 210 may include a neural network that may predict a drape mesh, which may be a drape simulation result for specific physical property parameters 201.

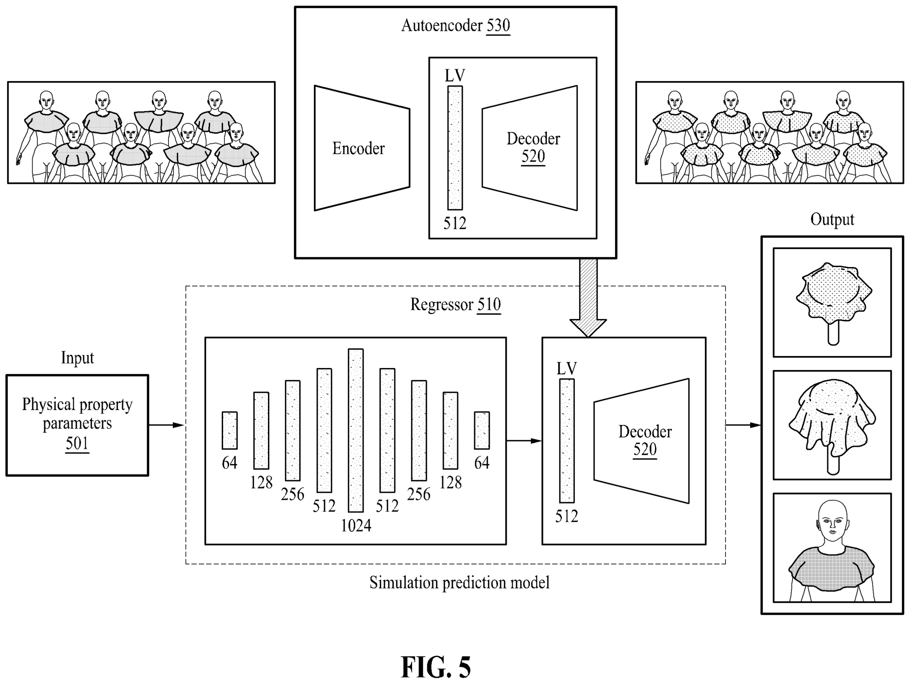

Referring to FIG. 5, a specific structure and learning of the simulation prediction model 210 are described. Referring to FIG. 5, the simulation prediction model 210 may include a regressor 510 and a decoder 520. The regressor 510 of the simulation prediction model 210 may estimate a latent vector of a simulated mesh from input physical property parameters 501. For example, the latent vector may be a 512-dimensional vector. The decoder 520 may decode the estimated latent vector to restore a drape mesh.

An autoencoder 530 may be used to extract the latent vector. The decoder 520 of the simulation prediction model 210 may be a decoder of the autoencoder 530. The autoencoder 530 may include a mesh structure-specific convolutional neural network (e.g., SpiralNet++) that may encode a mesh structure while maintaining a mesh structure. A latent vector of a certain size (e.g., 512 dimensions) may be extracted for the three types of drape shapes.

The simulation prediction model 210 may include the regressor 510, which is a regression model. For example, the regressor 510 may include a multi-layer perceptron (MLP) regression model to estimate a relationship between the physical property parameters 501 and the latent vector. For example, the regressor 510 may include nine hidden layers with 64, 128, 256, 512, 1024, 512, 256, 128, and 64 hidden units, respectively. A ReLU activation function may be included between each layer.

The autoencoder 530 may be trained using a simulated drape mesh in training data. The trained autoencoder 530 may be used to encode the simulated drape mesh of all training data and extract the latent vector. Thereafter, the regressor 510 may be trained using the latent vector.

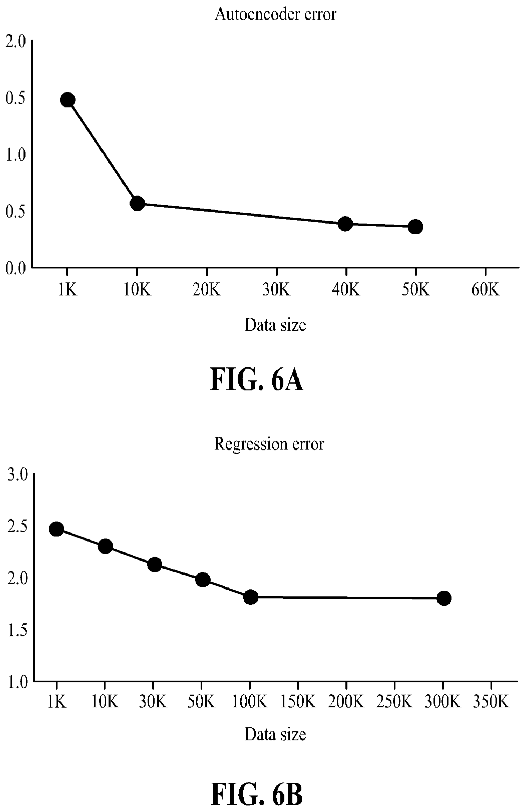

For example, a randomly selected portion of the training data (e.g., 40,000 pieces of training data) may be used for training of the autoencoder 530. All of the training data (e.g., 300,000 pieces of training data) may be used for training of the regressor 510. For example, the graph of FIG. 6A and the graph of FIG. 6B respectively show a reconstruction error and a regression error according to a number of training data. The reconstruction error of the autoencoder 530 was already sufficiently low when trained with 40,000 pieces of training data, and there was no significant change in the error when training was performed with more data. On the contrary, in the training of the regressor, the regression error may continue to decrease as a number of pieces of training data increases. By the above, it may be confirmed that diversity of physical property parameters is higher than diversity of drape shapes and that a relationship between physical property parameters and drape shape is many-to-one.

Referring again to FIG. 2, an optimizer 220 may be a model for finding the optimal physical property parameters 201 (e.g., P*) that minimizes an error between a target drape and the simulated drape. The target drape may refer to a drape included in the target data 202. The simulated drape may refer to a drape included in the drape data 211 extracted from the mesh obtained by the simulation prediction model 210. The simulated drape may refer to the simulated drape data described above. An optimization problem may be defined as Equation 3 below.

[Equation 3]

$$\mathbf{P}^* = \operatorname*{argmin}_{\mathbf{P}} E\Big(\mathcal{T}, \mathrm{Sim}(\mathbf{P})\Big)$$

$$\text{s.t.} \quad \mathbf{P} \in \mathcal{D},$$

In Equation 3, P denotes the physical property parameters 201, $\mathcal{T}$ denotes the target drape included in the target data 202, and Sim($\cdot$) denotes the simulation prediction model 210. E($\cdot$) denotes an error function that may calculate a difference between the target drape and an estimated simulated drape with respect to the physical property parameters 201 P. D denotes a domain condition defined by a user. A set of physical property parameters 201 that produce one drape shape may be assumed not to be unique. Bound-constrained global optimization may be used to find different results according to the condition specified by the user. For example, a dual annealing algorithm may be used for global optimization. Dual annealing may be adopted as one of metaheuristic optimization algorithms to solve a global optimization problem. A processor may use dual annealing to minimize a nonlinear and irregular objective function. In particular, dual annealing may start from a high energy state and gradually converge to a low energy state in a process of searching a parameter space to optimize the objective function and may combine a metaheuristic search method and sampling. Dual annealing may effectively search the parameter space through a metaheuristic algorithm and random sampling, and the processor may adaptively set a plurality of hyperparameters, which may affect a convergence speed or optimization performance in the process of the search through dual annealing, to optimize the model of the present disclosure. For example, an L-BFGS-B algorithm may be used for local optimization. Local optimization may be performed using a gradient obtained by backpropagation of an optimization neural network.

Four error functions that may be used independently or together for training of the optimization neural network may be defined.

The physical property parameters 201 may be estimated from a 3D boundary curve of the SQR-shape drape. As shown in Equation 4 below, a difference in a shape of a boundary curve between the target drape and the simulated drape may be defined as a first error function $E_{B3}$.

[Equation 4]

$$E_{B3} = (1 - \omega(t)) \sum_{i \in \Theta} \left\| \mathbf{v}_i - \mathbf{v}_i^* \right\|^2 + \omega(t) \sum_{i \in \Omega} \left\| \mathbf{v}_i - \mathbf{v}_i^* \right\|^2$$

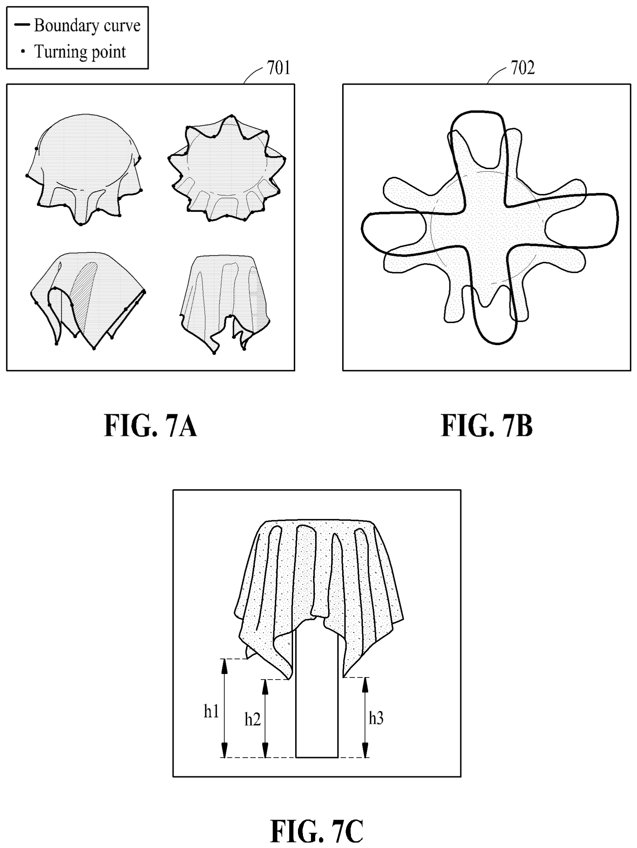

In Equation 4, $v_i^*$ and $v_i$ denote an i-th vertex of the target drape and the simulated drape, respectively. $\Theta$ denotes a set of indices of all sampling points on the boundary curve. $\Omega$ denotes a set of indices of the turning points of the boundary curve of the target drape. For example, referring to FIG. 7A, target data may include 3D scan data 701 related to a drape of a virtual fabric indicating the boundary curve and the turning point of the target drape.

In Equation 4, $\omega(t)$ denotes a weight function that decreases as time t passes. For example, $\omega(0)=0.9$ may be initially set, and $\omega$ may decrease by 0.99% every 100 evaluations of the objective function. At the beginning of the optimization, the weight may be set high for matching a number and a location of the turning points of the boundary curve, and as the optimization progresses, the weight may be set high for matching the shape of the entire drape.

A difference in a shape of a 2D boundary curve between the target drape and the simulated drape may be defined as a second error function. The second error function $E_{B2}$ may be defined from the first error function $E_{B3}$ by projecting 3D points onto a 2D plane. For example, the 2D boundary curve of the drape observed from a top view may be recorded using a rotoscope. For example, the 2D boundary curve may be drawn by the user. For example, referring to FIG. 7B, the target data may include sketch data 702 of the boundary curve of a CAP-shape drape projected in a front view. The sketch data 702 of FIG. 7B may be an example of the sketch data related to the drape of the virtual fabric described above.

The target data 202 of a sketch data type may be used when digital scan or photography of an actual drape is difficult. In addition, when an actual fabric does not exist, the target data 202 of a sketch data type may be used as the target data 202 for estimating the physical property parameters 201 by drawing a drape shape that a designer knows empirically.

Depth images taken from multiple directions may be used as target data for an SQR-shape drape. The depth image may include data related to an overall shape of the target drape and may be used even when it is difficult to record the boundary curve of the target drape accurately. A third error function $E_D$ for the depth image may be defined as Equation 5 below.

[Equation 5]

$$E_D = \sum_{i=1}^{n} \sum_{j=1}^{m} \left| [\mathbf{I}_k - \mathbf{I}_k^*]_{ij} \right|,$$

In Equation 5, $I_k^*$ and $I_k$ denote matrices of a k-th depth image of the target drape and the simulated drape, respectively. There may be more than one depth image. For example, four depth images with $256 \times 256$ pixel resolution taken from different directions may be used.

When manually adjusting the physical property parameters 201, there are reference points that expert designers consider important. For example, referring to FIG. 7C, in a case of a drape of a square specimen such as an SQR shape, heights of four corners (e.g., h1, h2, and h3) may correspond to the reference points. For example, in a case of a T-shirt, a degree to which a round line of a front and back of a neckline is bent downward may also correspond to the reference points. A fourth error function $E_L$ related to the reference points may be defined as Equation 6 below.

[Equation 6]

$$E_L = \sum_{i=1}^{4} \left\| l_i - l_i^* \right\|^2$$

In Equation 6, $l_i^*$ and $l_i$ denote a length of an i-th reference point in the target drape and in the simulated drape, respectively.

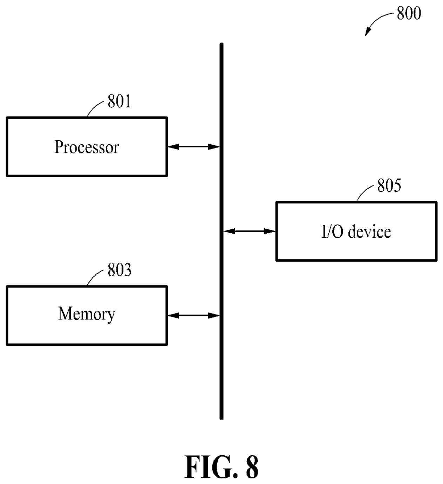

FIG. 8 is a diagram illustrating a configuration of an apparatus.

Referring to FIG. 8, a device 800 may include a processor 801, a memory 803, and an input/output (I/O) device 805. The electronic device 800 may include a device for performing the method of estimating physical property parameters described above with reference to FIGS. 1 to 7.

The processor 801 may perform at least one operation related to the method of estimating physical property parameters described above with reference to FIGS. 1 to 7. For example, the processor 801 may perform at least one of generating a mesh by applying physical property parameters corresponding to a virtual fabric to a neural network, obtaining, based on the mesh, drape data corresponding to a type of target data related to a drape of the virtual fabric, and updating the physical property parameters based on an error between the obtained drape data and the target data.

The memory 803 may be a volatile memory or a non-volatile memory and may store data related to the method of estimating physical property parameters described above with reference to FIGS. 1 to 7. For example, the memory 803 may store data generated in the process of performing the method of estimating physical property parameters or data necessary to perform the method of estimating physical property parameters. For example, the memory 803 may store updated physical property parameters and may store weight(s) and parameter(s) between layers included in the neural network and/or the optimizer of the trained simulation prediction model.

The memory 803 may store a program in which the method of estimating physical property parameters described above with reference to FIGS. 1 to 7 is implemented. The processor 801 may execute a program stored in the memory 803 and may control the electronic device 800. Code of the program executed by the processor 801 may be stored in the memory 803.

The electronic device 800 may receive data from a user through the I/O device 805 and output generated data. For example, the electronic device 800 may receive the target data through the I/O device 805 and output a simulation result of a virtual fabric generated based on determined physical property parameters or a value of the determined physical property parameters. The electronic device 800 may be connected to an external device (e.g., a personal computer (PC) or a network) through the I/O device 805 and exchange data with the external device.

The electronic device 800 may further include other components not shown in the drawings. For example, the electronic device 800 may include a communication module that provides a function for the electronic device 800 to communicate with another electronic device or another server through a network. In addition, for example, the electronic device 800 may further include other components such as a transceiver, various sensors, and a database.

The embodiments described herein may be implemented using a hardware component, a software component, and/or a combination thereof. For example, a processing device may be implemented using one or more general-purpose or special-purpose computers, such as, for example, a processor, a controller, an arithmetic logic unit (ALU), a digital signal processor (DSP), a microcomputer, a field-programmable gate array (FPGA), a programmable logic unit (PLU), a microprocessor, or any other device capable of responding to and executing instructions in a defined manner. The processing device may run an operating system (OS) and one or more software applications that run on the OS. The processing device may also access, store, manipulate, process, and create data in response to execution of the software. For purpose of simplicity, the processing device is described as singular. However, one of ordinary skill in the art will appreciate that a processing device may include multiple processing elements and/or multiple types of processing elements. For example, the processing device may include a plurality of processors, or a single processor and a single controller. In addition, a different processing configuration is possible, such as one including parallel processors.

The software may include a computer program, a piece of code, an instruction, or one or more combinations thereof, to independently or collectively instruct or configure the processing device to operate as desired. The software and/or data may be stored in any type of machine, component, physical or virtual equipment, or computer storage medium or device for the purpose of being interpreted by the processing device or providing instructions or data to the processing device. The software may also be distributed over network-coupled computer systems so that the software is stored and executed in a distributed fashion. The software and data may be stored in a non-transitory computer-readable recording medium.

The methods according to the embodiments may be recorded in non-transitory computer-readable media including program instructions to implement various operations of the embodiments. The media may also include the program instructions, data files, data structures, and the like alone or in combination. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs and DVDs; magneto-optical media such as floptical disks; and hardware devices that are specially configured to store and perform program instructions, such as read-only memory (ROM), random-access memory (RAM), flash memory, and the like. Examples of program instructions include both machine code, such as those produced by a compiler, and files containing high-level code that may be executed by the computer using an interpreter.

The above-described hardware devices may be configured to act as one or more software modules in order to perform the operations of the above-described embodiments, or vice versa.

Although the embodiments have been described with reference to the limited number of drawings, one of ordinary skill in the art may apply various technical modifications and variations based thereon. For example, suitable results may be achieved if the described techniques are performed in a different order and/or if components in a described system, architecture, device, or circuit are combined in a different manner and/or replaced or supplemented by other components or their equivalents.

Therefore, other implementations, other embodiments, and equivalents to the claims are also within the scope of the following claims.

**Claims**

1. A method of estimating physical property parameters for drape simulation of a virtual fabric, the method comprising:

generating, by applying physical property parameters corresponding to the virtual fabric to a neural network, which is trained on a correlation between the physical property parameters and a mesh in a state in which the virtual fabric is draped on an object, the mesh;
obtaining, based on the mesh, simulated drape data corresponding to a type of target data related to a drape of the virtual fabric; and
updating the physical property parameters based on an error between the obtained simulated drape data and the target data.

2. The method of claim 1, wherein the updating of the physical property parameters comprises:
updating the physical property parameters based on an optimizer for determining a value of the physical property parameters that minimizes the error.

3. The method of claim 1, wherein the generating of the mesh comprises:

obtaining a latent vector corresponding to the physical property parameters from a regressor of the neural network; and
generating the mesh corresponding to the latent vector, based on a decoder of the neural network.

4. The method of claim 1, wherein the error comprises at least one of:

an error corresponding to a difference in a three-dimensional (3D) shape of a boundary curve between the target data and the simulated drape data;
an error corresponding to a difference in a two-dimensional (2D) shape of the boundary curve between the target data and the simulated drape data;
an error corresponding to a difference in a depth image matrix between the target data and the simulated drape data; and
an error corresponding to a difference in reference points between the target data and the simulated drape data.

5. The method of claim 1, further comprising:
obtaining the physical property parameters based on the target data input by a user.

6. The method of claim 1, wherein the type of target data comprises at least one of:

a type of 3D scan data related to the drape of the virtual fabric;
a type of 2D image data related to the drape of the virtual fabric;
a type of sketch data related to the drape of the virtual fabric;
a type of depth image data related to the drape of the virtual fabric; and
a type of numerical data related to the drape of the virtual fabric.

7. The method of claim 1, wherein the target data comprises at least one of CIR-shape drape data, SQR-shape drape data, and CAP-shape drape data.

8. The method of claim 1, wherein the physical property parameters comprise:
at least one of a parameter related to stretch stiffness and a parameter related to bending stiffness.

9. The method of claim 8, wherein the parameter related to stretch stiffness comprises:

a first parameter and a second parameter related to a factor of a stretch coefficient function; and
a weft direction parameter, a warp direction parameter, and a bias direction parameter of each of the first parameter and the second parameter.

10. The method of claim 8, wherein the parameter related to bending stiffness comprises:

a third parameter and a fourth parameter related to a factor of a bending coefficient function; and
a weft direction parameter, a warp direction parameter, and a bias direction parameter of each of the third parameter and the fourth parameter.

11. The method of claim 1, further comprising:
generating a drape simulation result of the virtual fabric based on the updated physical property parameters.

12. A non-transitory computer-readable storage medium storing instructions that, when executed by a processor, cause the processor to perform the method of claim 1.

13. An electronic device for estimating physical property parameters for drape simulation of a virtual fabric, comprising a processor configured to:

generate, by applying physical property parameters corresponding to the virtual fabric to a neural network, which is trained on a correlation between the physical property parameters and a mesh in a state in which the virtual fabric is draped on an object, the mesh;

obtain, based on the mesh, simulated drape data corresponding to a type of target data related to a drape of the virtual fabric; and

update the physical property parameters based on an error between the obtained simulated drape data and the target data.

Start

Generate mesh by applying physical property
parameters corresponding to virtual fabric
／110

Obtain simulated drape data corresponding to type of
target data related to drape of virtual fabric based on mesh
／120

Update physical property parameters based on error
between target data and obtained simulated drape data
／130

End

## FIG. 1

200

FIG. 2

311

312

○ low  ○ high  ○ all

0 ⸺ 99  α_weft

0 ⸺ 99  α_warp

0 ⸺ 99  α_bias

0 ⸺ 99  αe_weft

0 ⸺ 99  αe_warp

0 ⸺ 99  αe_bias

○ low  ○ high  ● all

0 ⸺ 99  β_weft

0 ⸺ 99  β_warp

0 ⸺ 99  β_bias

0 ⸺ 99  βS_weft

0 ⸺ 99  βS_warp

0 ⸺ 99  βS_bias

**FIG. 3A**

FIG. 3B

EP 4 722 988 A1

Circular specimen

FIG. 4A

17

Square specimen

FIG. 4B

Capelet specimen

FIG. 4C

FIG. 5

Autoencoder error

**FIG. 6A**

Regression error

**FIG. 6B**

FIG. 7A

FIG. 7B

FIG. 7C

800

801

Processor

805

I/O device

803

Memory

**FIG. 8**

## INTERNATIONAL SEARCH REPORT

| | International application No. |
|---|---|
| | **PCT/KR2024/007046** |

### A. CLASSIFICATION OF SUBJECT MATTER

**G06N 3/09**(2023.01)i; **G06N 3/10**(2006.01)i; **G06N 3/0455**(2023.01)i; **G06T 17/20**(2006.01)i

According to International Patent Classification (IPC) or to both national classification and IPC

### B. FIELDS SEARCHED

Minimum documentation searched (classification system followed by classification symbols)

G06N 3/09(2023.01); G06N 3/08(2006.01); G06Q 30/06(2012.01); G06T 5/00(2006.01); G06T 7/00(2006.01); G06T 7/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 가상 원단(virtual fabric), 드레이프 시뮬레이션(drape simulation), 신경망(neural network), 물성 파라미터(physical parameter), 메쉬(mesh), 타겟 데이터(target data), 갱신(updating)

### C. DOCUMENTS CONSIDERED TO BE RELEVANT

| Category* | Citation of document, with indication, where appropriate, of the relevant passages | Relevant to claim No. |
|---|---|---|
| Y | KR 10-2023-0035282 A (CLO VIRTUAL FASHION INC.) 13 March 2023 (2023-03-13)<br>See paragraphs [0015]-[0016], [0047], [0052], [0058], [0064]-[0065], [0078], [0093] and [0105]; claim 1; and figure 8. | 1-13 |
| Y | JP 2021-128569 A (SCREEN HOLDINGS CO., LTD.) 02 September 2021 (2021-09-02)<br>See claim 1. | 1-13 |
| A | WO 2023-282614 A1 (CLO VIRTUAL FASHION INC.) 12 January 2023 (2023-01-12)<br>See paragraphs [0148]-[0173]; and figures 11-14. | 1-13 |
| A | KR 10-2130252 B1 (CLO VIRTUAL FASHION INC.) 06 July 2020 (2020-07-06)<br>See paragraphs [0056]-[0067]; and figures 4-5. | 1-13 |
| A | KR 10-2224056 B1 (YESNOW INC.) 09 March 2021 (2021-03-09)<br>See paragraphs [0045]-[0069]; and figures 3-9. | 1-13 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 August 2024** | **22 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/007046**

| Patent document cited in search report | | | Publication date (day/month/year) | Patent family member(s) | | | Publication date (day/month/year) |
|---|---|---|---|---|---|---|---|
| KR | 10-2023-0035282 | A | 13 March 2023 | CA | 3191980 | A1 | 10 March 2022 |
| | | | | CN | 114241473 | A | 25 March 2022 |
| | | | | EP | 3975134 | A1 | 30 March 2022 |
| | | | | JP | 2023-540600 | A | 25 September 2023 |
| | | | | JP | 7462111 | B2 | 04 April 2024 |
| | | | | KR | 10-2022-0032270 | A | 15 March 2022 |
| | | | | KR | 10-2504871 | B1 | 02 March 2023 |
| | | | | KR | 10-2553955 | B1 | 11 July 2023 |
| | | | | US | 11900582 | B2 | 13 February 2024 |
| | | | | US | 2022-0076405 | A1 | 10 March 2022 |
| | | | | WO | 2022-050810 | A1 | 10 March 2022 |
| JP | 2021-128569 | A | 02 September 2021 | CN | 113268963 | A | 17 August 2021 |
| | | | | JP | 7421363 | B2 | 24 January 2024 |
| | | | | US | 2021-0256308 | A1 | 19 August 2021 |
| WO | 2023-282614 | A1 | 12 January 2023 | CN | 115803787 | A | 14 March 2023 |
| | | | | EP | 4191536 | A1 | 07 June 2023 |
| | | | | TW | 202320020 | A | 16 May 2023 |
| | | | | US | 2023-0245367 | A1 | 03 August 2023 |
| KR | 10-2130252 | B1 | 06 July 2020 | US | 11145098 | B2 | 12 October 2021 |
| | | | | US | 2021-0056743 | A1 | 25 February 2021 |
| KR | 10-2224056 | B1 | 09 March 2021 | | None | | |

Form PCT/ISA/210 (patent family annex) (July 2022)